(19) Europäisches Patentamt
European Patent Office
Office européen des brevets

(11) **EP 0 340 558 B1**

(12) **EUROPÄISCHE PATENTSCHRIFT**

(45) Veröffentlichungstag und Bekanntmachung des Hinweises auf die Patenterteilung:
**31.07.1996 Patentblatt 1996/31**

(51) Int Cl.6: **G02B 6/18**, G02B 6/16

(21) Anmeldenummer: **89107183.9**

(22) Anmeldetag: **21.04.1989**

(54) **Lichtwellenleiter**

Light guide

Guide de lumière

(84) Benannte Vertragsstaaten:
**AT BE CH DE ES FR GB IT LI LU NL SE**

(30) Priorität: **28.04.1988 DE 3814295**

(43) Veröffentlichungstag der Anmeldung:
**08.11.1989 Patentblatt 1989/45**

(73) Patentinhaber: **HOECHST AKTIENGESELLSCHAFT**
**65926 Frankfurt am Main (DE)**

(72) Erfinder:
• **Herbrechtsmeier, Peter, Dr.**
**D-6240 Königstein/Taunus (DE)**

• **Wieners, Gerhard, Dr.**
**D-6000 Franfurt am Main (DE)**
• **Kuhls, Jürgen, Dr.**
**D-8263 Burghausen (DE)**
• **Fitz, Herbert, Dr.**
**D-8269 Burgkirchen (DE)**
• **Tschacher, Manfred**
**D-8261 Emmerting (DE)**

(56) Entgegenhaltungen:
**EP-A- 0 154 339          EP-A- 0 162 472**
**US-A- 4 521 483          US-A- 4 807 964**

**Beschreibung**

Die Erfindung bezieht sich auf Lichtwellenleiter (LWL), welche sich für die Übertragung von Licht, beispielsweise von Lichtsignalen für die Datenübertragung, eignen.

Die Lichtwellenleiter bestehen aus einem Kern und einem Mantel, die beide aus (unterschiedlichen transparenten Materialien bestehen, wobei das Kernmaterial immer einen um mindestens ein Prozent höheren Brechungsindex aufweist als das Mantelmaterial. Der Lichtwellenleiter ist im allgemeinen fadenförmig und weist einen kreisförmigen Querschnitt auf. Ein Mantelmaterial ist mit ringförmigen Querschnitt in einer dünnen Schicht auf den fadenförmigen Kern aufgetragen.

Die bisher für Lichtwellenleiter am häufigsten eingesetzten Materialien sind Homo- und Copolymere von Methacrylsäureestern im Kern und Homo- und Copolymere von Methacrylsäureestern fluorhaltiger Alkohole oder Copolymere des Vinylidenfluorids mit anderen fluorhaltigen Monomeren im Mantel.

Bekannt sind Lichtwellenleiter, deren Kern aus Homo- oder Copolymeren des Methylmethacrylats (MMA), des Styrols oder den Methacrylsäureestern aliphatischer Alkohole besteht. Der Mantel dieser Lichtwellenleiter besteht aus Copolymeren oder Terpolymeren von Vinylidenfluorid (VdF), Tetrafluorethylen (TFE) und/oder Hexafluorpropylen (HFP) (vgl. EP-A 154 339, EP-A 97 325, DE-A 24 55 265).

Bekannt ist außerdem, daß die Dauergebrauchstemperatur von Lichtwellenleitern, deren Kern oder Mantel aus einem geeigneten Polymeren besteht, durch Behandlung mit ionisierender Strahlung verbessert werden kann. Es ist jedoch ebenso bekannt, daß Polymere, die MMA enthalten, sich unter dem Einfluß ionisierender Strahlen gelbbraun verfärben. Dadurch wird die Transparenz des Kernmaterials beeinträchtigt und die Polymerketten des PMMA werden durch die Wirkung der ionisierenden Strahlung abgebaut.

Schließlich ist bekannt, daß man Polymere, die VdF enthalten, durch Umsetzung des Polymeren mit der Verbindung Dimethylmethoxyvinylsilan und unter Einwirkung von Wasser nach der thermoplastischen Verarbeitung vernetzen kann (vgl. DE-A 33 27 596).

Ebenfalls bekannt sind Lichtwellenleiter, deren Kern aus Copolymeren des Methylmethacrylats mit Methacrylsäureestern alicyclischer Alkohole besteht. Der Mantel derartiger Lichtwellenleiter enthält Einheiten, die sich von Estern der Trifluormethacrylsäure oder der $\alpha$-Fluoracrylsäure mit fluorhaltigen Alkoholen ableiten (EP-A-0 162 472).

Aufgabe war die Bereitstellung eines transparenten Polymermaterials aus leicht zugänglichen Monomeren zur Herstellung von Lichtwellenleitern, die für Übertragungslängen von 10 bis 100 Metern bei Wellenlängen von 650 und 780 nm geeignet sind und die auch bei einer Temperatur über 100°C ohne wesentliche Einschränkung der Übertragungslänge verwendet werden können.

Es wurde gefunden, daß ein Lichtwellenleiter, dessen Kern aus einem Polymer auf Basis Vinylidenfluorid, Tetrafluorethylen und Hexafluorpropylen besteht, diese Aufgabe zu erfüllen vermag.

Somit betrifft die Erfindung einen Lichtwellenleiter mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1,01 ist, dadurch gekennzeichnet, daß das Polymer des Kerns Einheiten enthält, die sich, jeweils bezogen auf das Polymer, zu

30 bis 50 Gew.-% vom Vinylidenfluorid, zu
25 bis 55 Gew.-% vom Tetrafluorethylen und zu
15 bis 25 Gew.-% vom Hexafluorpropylen ableiten.

Das Polymer des Mantels enthält Einheiten, die sich vom Vinylidenfluorid zu weniger als 30 Gew.-% bezogen auf das Polymer, Tetrafluorethylen und Hexafluorpropylen oder von Estern der Methacrylsäure oder $\alpha$-Fluorarcylsäure mit fluorierten Alkoholen ableiten.

Die Erfindung betrifft weiterhin ein Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1,01 ist, durch Extrusion des Kerns und Umgeben des Kerns mit einem Mantel, dadurch gekennzeichnet, daß das Polymer des Kerns aus Einheiten gewonnen wird, die sich, jeweils bezogen auf das Polymer, zu

30 bis 50 Gew.-% vom Vinylidenfluorid, zu
25 bis 55 Gew.-% vom Tetrafluorethylen und zu
15 bis 25 Gew.-% vom Hexafluorpropylen ableiten. Das Polymer des Mantels wird aus Einheiten gewonnen, die sich vom Vinylidenfluorid zu weniger als 30 Gew.-% vom Polymer, Tetrafluorethylen zu weniger als 30 Gew.-% vom Polymer, Tetrafluorethylen und Hexafluorpropylen oder von Estern der Methacrylsäure oder $\alpha$-Fluoracrylsäure mit fluorierten Alkoholen ableiten.

Der Kern des erfindungsgemäßen Lichtwellenleiters besteht aus einem Polymer, welches Einheiten enthält, die sich vom Vinylidenfluorid (VdF), vom Tetrafluorethylen (TFE) und vom Hexafluorpropylen (HFP) ableiten. Die Anteile dieser Einheiten am Polymer betragen

VdF 30 bis 50, vorzugsweise 35 bis 45 Gew.-%,
TFE 25 bis 55, vorzugsweise 35 bis 45 Gew.-% und
HFP 15 bis 25, vorzugsweise 17 bis 22 Gew.-%, jeweils bezogen auf die Gesamtmenge des Polymers.

Diese Materialien sind dadurch gekennzeichnet, daß sie sowohl im Bereich von 650 nm als auch um 780 nm besonders klar und transparent sind. In Übereinstimmung mit dieser Beobachtung kann mittels der DSC-Methode keine Restkristallinität - sonst erkennbar an charakteristischen Meßsignalen, die das Aufschmelzen von PVdF - oder PTFE-Kristalliten anzeigen - nachgewiesen werden, die häufig dazu führt, daß Copolymere des VdF und TFE das Licht stark streuen.

Polymere mit einem niedrigeren Vdf-Gehalt weisen Brechungsindices von weniger als 1,35 auf: Mantelmaterialien für einen Kern aus einem Copolymeren mit weniger als 30 Gew.-Teilen VdF müßten also Brechungsindices von 1,335 oder weniger aufweisen. Ausreichend transparente Polymermaterialien mit solch niedrigen Brechungsindices sind nicht bekannt.

Polymere mit einem höheren VdF-Gehalt sind aufgrund einer höheren Kristallinität weniger transparent.

Der Mantel des erfindungsgemäßen Lichtwellenleiters ist ein Polymer, welches Einheiten enthält, die sich vom Vinylidenfluorid, Tetrafluorethylen, Hexafluoropropylen oder von Estern der Methacrylsäure oder $\alpha$-Fluoracrylsäure mit fluorierten Alkoholen ableiten. Bevorzugt sind Copolymere von Vinylidenfluorid, Tetrafluorethylen und Hexafluorpropylen mit einem Gehalt an VdF-Einheiten von weniger als 30 Gew.-%, Homo- und Copolymere von $\alpha$-Fluoracrylsäure-hexafluorisopropylester (FA-HFP), $\alpha$-Fluoracrylsäure-perfluorisopropylester (FA-PIP) oder $\alpha$-Fluoracrylsäure-perfluor-2,3-dimethylbut-2-ylester (FA-PDB). Besonders bevorzugt sind Copolymere von Vinylidenfluorid, Tetrafluorethylen und Hexafluorpropylen mit einer Zusammensetzung von VdF 10 bis 30, vorzugsweise 20 bis 30 Gew.-%, HFP 10 bis 25, vorzugsweise 10 bis 20 Gew.-%, TFE 45 bis 70, vorzugsweise 50 bis 65 Gew.-%, jeweils bezogen auf die Gesamtmenge Polymer, sowie Homo- und Copolymere des $\alpha$-fluoracrylsäurehexafluorisopropylesters (FA-HFIP).

Diese Materialien sind dadurch gekennzeichnet, daß ihr Brechungsindex $\mu_m$ mindestens 1 % unter dem Brechungsindex des Kernmaterials liegt und daß diese Materialien hochtransparent sind.

Vorzugsweise sind die Polymeren von Kern und Mantel des Lichtwellenleiter vernetzt, insbesondere wenn diese Polymeren Copolymere von Vinylidenfluorid, Tetrafluorethylen und Hexafluorpropylen sind. Die Vernetzung kann durch ionisierende Strahlung oder durch Modifizierung der Polymeren mittels feuchtigkeitsempfindlicher Reagentien erfolgt sein.

Der erfindungsgemäße Lichtwellenleiter wird nach einem der nachstehenden Verfahren hergestellt:

1. Der Lichtwellenleiter wird durch gleichzeitige Extrusion des Kern- und des Mantelmaterials (Coextrusion) mit Hilfe einer Bikomponentendüse hergestellt. Falls erwünscht, kann anschließend an dieses Verfahren der Lichtwellenleiter der Wirkung ionisierender Strahlung ausgesetzt werden.

2. Man stellt zunächst den Kernfaden durch Extrusion her. Danach trägt man das Mantelmaterial entweder in Form einer Mischung des Mantelmaterials mit einem flüchtigen Lösemittel unter Verdampfung des Lösemittels oder durch Extrusion des Mantelmaterials mit Hilfe eines Extruders der für die Umhüllung von Drähten ausgerüstet wurde, auf. Im Falle der Lösemittelbeschichtung kann das Lösemittel entweder geeignet sein zur Herstellung einer homogenen Lösung des Mantelpolymeren oder zur Herstellung einer Dispersion oder einer Emulsion des Mantelpolymeren. Bei diesem Verfahren kann eine selektive Vernetzung des Kernmaterials durch ionisierende Strahlung nach der Extrusion des Kernmaterials und vor der Beschichtung mit dem Mantelmaterial vorgenommen werden.

3. Statt des Terpolymeren aus VdF, TFE und HFP können durch Trimethoxyvinylsilan-Propfung modifizierte und mit Umsilylierungskatalysatoren vermischte Terpolymere aus VdF, TFE und HFP im Kern, eventuell zugleich in Kern und Mantel eingesetzt werden. Dabei können entweder Kern und Mantel zugleich in einer Bikomponentendüse zum Lichtwellenleiter extrudiert oder der Lichtwellenleiterkern nachträglich mit einem Mantel versehen werden. Eine Vernetzung der silanmodifizierten Terpolymeren tritt bei diesem Verfahren in wasserdampfhaltiger Atmosphäre spontan ein.

Lichtwellenleiter, die Copolymere aus VdF, TFE und HFP im Kern enthalten, können bei einer Temperatur bis 70°C über Stunden eingesetzt werden, ohne an Lichtdurchlässigkeit zu verlieren. Die so anhand der Dauergebrauchstemperatur definierte Wärmestandfestigkeit eines solchen Lichtwellenleiters läßt sich erheblich verbessern, wenn man das Kern- oder das Mantelmaterial des Lichtwellenleiters oder beide vernetzt.

Der erfindungsgemäße Lichtwellenleiter weist eine hohe Lichtdurchlässigkeit auf, sofern bei der Herstellung der Copolymeren und des Lichtwellenleiters alle partikelartigfesten und löslichen Verunreinigungen sorgfältig ausgeschlossen wurden. Die Lichtdurchlässigkeit einer solchen Faser wird im allgemeinen durch die zur Lichtdurchlässigkeit reziproke Größe der Dampfung D gemäß der Formel

$$D = 10 \cdot \log (I/I_0)/1,$$

in der Einheit dB/km ausgedrückt. In der Formel bedeutet I die Intensität des Lichts am Ausgang des Lichtwellenleiters, $I_0$ die Intensität am Anfang des Lichtwellenleiters, 1 die Länge des Lichtwellenleiters in km.

Die erfindungsgemäßen Lichtwellenleiter zeichnen sich durch geringe Dämpfung, hohe Dauergebrauchstemperatur und gute Biegebeständigkeit aus. Zudem können diese Lichtwellenleiter für große Übertragunslängen bei Wellenlängen um 650 nm und 780 nm eingesetzt werden.

Die Erfindung wird anhand der folgenden Beispiele näher erläutert. Dabei wurde die Dämpfung eines Lichtwellenleiters auf die folgende Art und Weise bestimmt:

In ein Ende eines 10 bis 30 m langen Lichtleitfadens wurde mit Hilfe einer geeigneten Lichtquelle Licht eingekoppelt, während am anderen Ende die Intensität des austretenden Lichts gemessen wurde. Der Lichtleitfaden wurde anschließend jeweils um eine exakt bestimmte Länge von etwa einem Meter gekürzt und die austretende Lichtintensität erneut gemessen. Anhand einer logarithmischen Auftragung der gemessenen Lichtintensitäten gegen die Jeweilige Länge des Lichtwellenleiters kann die Dämpfung aus der Steigung bestimmt werden.

Während der Dauer der Messung der Temperaturabhängigkeit der Dämpfung wurden die Verbindungen zwischen Lichtquelle bzw. Lichtdetektor und Lichtwellenleiter nicht verändert, lediglich ein exakt bestimmter Teil des Lichtwellenleiters in einem Klimaschrank im Luftbad auf die Meßtemperatur temperiert. Aus der Abschwächung der Lichtintensität am Ausgang des Lichtwellenleiters und der Länge des temperierten Fadenstücks kann die Änderung der Dämpfung im temperierten Teil des Lichtwellenleites berechnet werden.

Zur Messung der Flexibilität wurden die Verbindungen zwischen Lichtquelle bzw. Lichtdetektor und dem Lichtwellenleiter nach einer ersten Messung der austretenden Lichtintensität nicht verändert. Ein Teil des Lichtleitfadens in der Mitte der Meßstrecke wurde dreimal um einen zylinderförmigen Stab gewunden, wieder von dem Stab abgewickelt und danach die Intensität des austretenden Lichts gemessen. Hatte die Intensität des Lichts nicht oder nicht wesentlich abgenommen, so wurde der Vorgang an einem Stab eines kleineren Durchmessers wiederholt. Der kleinste Biegeradius, der ohne Verschlechterung der Lichtwellenleiterqualität zugelassen werden kann, ist ein Maß für die Flexibilität des Lichtwellenleiters.

**Beispiel 1**

Zunächst wurde in bekannter Weise ein Copolymeres aus TFE, HFP und VdF in einem Suspensionsverfahren hergestellt. Die wäßrige Flotte enthielt Perfluoroctansäure als Emulgator und Kaliumhydrogensulfat als Puffer. Als Starter diente Ammoniumpersulfat. Polymerisiert wurden 40 Gew.-% TFE, 20 Gew.-% HFP und 40 Gew.-% VdF bei einer Temperatur von 70°C und einem Druck von 9 bar. Als Regler diente Diethylmalonester.

Das Produkt war in Methylethylketon und anderen Lösemitteln löslich. Eine 1 %ige Lösung wies bei 25°C eine reduzierte spezifische Viskosität von 87 cm$^3$/g auf. Mit Hilfe der Gelpermeationschromatographie wurde ein Gewichtsmittelwert der Molmasse von 177 000 bestimmt (in Tetrahydrofuran als Lösemittel, gemessen an einer Eichkurve von Polystyrol-Standardpräparaten). Die Zusammensetzung des Polymeren wurde mittels 19-F-NMR-Spektroskopie zu 40 Gew.- Teilen TFE, 20 Teilen HFP und zu 40 Teilen VdF bestimmt. Der Brechungsindex des Copolymeren betrug $n_D^{25} = 1,366$.

In der DSC waren nur sehr geringe kristalline Anteile zu erkennen.

**Beispiel 2**

100 Gew.-Teile $\alpha$-Fluoracrylsäurehexafluorisopropylester (FA-HFIP) wurden durch Destillation und Filtration über ein feinporiges Membranfilter sorgfältig gereinigt und mit 0,1 Gew.-Teilen tert.-Butylperoxyisopropylcarbonat und 0,5 Teilen Butylendimerkaptan versetzt und kontinuierlich in einen Rührkessel, der auf 90°C temperiert wurde, eingespeist. Die entstehende sirupartige Mischung wurde kontinuierlich in einen Doppelschneckenextruder überführt, in dem die Polymerisation bei einer Temperatur von 110 bis 150°C vervollständigt wurde. Flüchtige Bestandteile wurden im Vakuum in einer Entgasungszone entfernt. Der entstandene Poly($\alpha$-fluoracrylsäurehexafluorisopropylester) (Poly(FA-HFIP) wurde in diesem und in den nachfolgenden Beispielen zur Herstellung des Mantels von polymeren Lichtwellenleitern benutzt.

Ein Copolymeres aus VdF, TFE und HFP wurde nach Beispiel 1 hergestellt und in einem Zweischnecken-Entgasungsextruder aufgeschmolzen, Poly(fluoracrylsäurehexafluorisopropylester) (Poly(FA-HFIP)) wurde in einem Einschneckenextruder aufgeschmolzen. In einer Bikomponenten-Spinndüse wurden das VdF-Copolymere zum Kern eines Lichtwellenleiters und das Poly(FA HFIP) zum Mantel verarbeitet. Die Arbeitsparameter der Spinnanlage wurden so eingestellt, daß ein Faden von 1 mm Durchmesser entstand, dessen Mantelschicht 10 μm dick war.

Der Lichtwellenleiter wies bei Zimmertemperatur eine Dämpfung von 800 dB/km bei 650 nm, von 620 dB/km bei 780 nm auf.

Zur Prüfung der Dauergebrauchstemperatur wurde die Dämpfung bei verschiedenen Temperaturen zwischen Zimmertemperatur und bis zu 140°C jeweils über mehrere Stunden gemessen. Die Dämpfung stieg bei 70°C während der Meßzeit geringfügig auf einen Wert von 870 dB/km bei 650 nm. Bei höherer Temperatur stieg die Dämpfung so stark an, daß der Polymerdraht nicht mehr als Lichtwellenleiter zu gebrauchen war.

Bei der Prüfung der Flexibilität wurde als kleinster zulässiger Krümmungsradius 15 mm gefunden.

**Vergleichsbeispiele A und B**

In der Art und Weise, wie im Beispiel 1 angegeben ist, wurden Copolymere hergestellt deren Zusammensetzungen in Tabelle 1 angegeben sind. Nach den Angaben in Beispiel 2 wurden aus diesen Copolymeren als Kern- und Poly (FA-HFIP) als Mantelmaterial Lichtwellenleiter hergestellt, deren Eigenschaften gleichfalls in Tabelle 1 aufgeführt sind.

Aus keinem dieser Copolymeren konnten Lichtwellenleiter ausreichend niedriger Dämpfung hergestellt werden.

Tabelle 1:

| Vergleichsbeispiel | Zusammensetzung | | | Dämpfung | Bemerkungen |
|---|---|---|---|---|---|
| | VdF | HFP | TFE | (dB/km) | |
| A | 60 | 20 | 20 | 1200 | bei 70°C: 3000 dB/km. Das Copolymere ist weich und klebrig. |
| B | 40 | - | 60 | 2500 | DSC: kristalline Anteile |

**Beispiel 3**

Ein Copolymeres aus 45 Gew.-Teilen VdF, 20 Teilen TFE und 35 Teilen HFP, das in der Art und Weise hergestellt worden war, wie sie im Beispiel 1 angegeben ist, wurde in einen Doppelschnecken Entgasgungsextruder eingespeist und zum Kern, ein Copolymeres aus 40 Gew.-Teilen $\alpha$-Fluoracrylsäureperfluor-2,2-dimethylbutyl-2-ester (FA-PDB) und 60 Gew.-Teilen Fa-HFIP zum 10 μm dicken Mantel eines Lichtwellenleiters von 1 mm Durchmesser extrudiert.

Der Lichtwellenleiter wies eine Dämpfung von 800 dB/km bei 650 nm auf, die bei 70°C auf 850 dB/km anstieg. Bei 780 nm wurden bis 25°C 640 dB/km, bei 70°C 690 dB/km gemessen.

**Beispiel 4**

Ein Copolymeres aus 40 Gew.-Teilen VdF, 20 Teilen HFP und 40 Teilen TFE wurde zum 1 mm dicken Kern eines Lichtwellenleiters verarbeitet und durch Einwirkung von 200 kGy Co-60-strahlung vernetzt.

Dieser Lichtwellenleiter-Kern wurde anschließend durch eine kreisrunde Kapillaröffnung von 1,2 mm Durchmesser am Boden eines Gefäßes durchgeführt, das mit einer Lösung von 10 Gew.-Teilen eines Copolymeren aus 20 Gew.-Teilen FA-PDB und 80 Gew.-Teilen FA-HFIP in wasserfreiem Methanol gefüllt wurde. Unmittelbar nach dem Austritt aus der Kapillaröffnung, wurde die beschichtete Faser durch ein Luftbad geführt, das mit Hilfe von Heizstrahlern auf einer Temperatur von 70°C gehalten wurde. Dadurch verdampfte das Methanol, und es resultierte eine auf dem Lichtwellenleiterkern fest haftende Schicht des Copolymeren aus den beiden Fluoracrylsäureestern, deren Dicke 20 μm betrug.

Der so erhaltene Lichtwellenleiter mit Kern/Mantel-Struktur wies eine Lichtdämpfung von 1050 dB/km bei 650 nm, von 920 dB/km bei 780 nm auf. Die Dampfung blieb bis zu einer Temperatur von 70°C konstant und stieg bei höherer Temperatur auf 1200 dB/km bei 120°C und 650 nm an. Wurde der Lichtwellenleiter wieder abgekühlt, so fiel die Dämpfung wieder auf die Ausgangswerte zurück. Die Dämpfung erhöhte sich nicht, nachdem der Lichtwellenleiter um einen Stab mit einem Durchmesser von 15 mm gewunden worden war.

**Vergleichsbeispiel C**

Aus den Materialien und in der Art und Weise, wie im Beispiel 4 angegeben wurde, wurde durch das Bikomponenten-Spinnverfahren direkt ein Lichtwellenleiter mit Kern/Mantel-struktur erzeugt und anschließend mit 200 kGy Co-60-Strahlung behandelt.

Der so erzeugte Lichtwellenleiter wies eine Dämpfung von 1100 dB/km bei 650 nm und 25°C auf. Die Dämpfung stieg an auf Werte von über 2000 dB/km nachdem der Lichtwellenleiter um einen runden Stab von 50 mm Durchmesser gewunden worden war. An dieser Stelle strahlte das in den Lichtwellenleiter eingekoppelte Licht ab und ein großer Teil der übertragenen Lichtintensität ging verloren. Unter dem Lichtmikroskop waren an dieser Stelle Risse im Mantelmaterial und Stellen zu erkennen, an denen sich der Mantel vom Kern gelöst hatte.

**Beispiel 5**

Ein Copolymeres aus 35 Gew.-Teilen VdF, 20 Teilen HFP und 45 Teilen TFE wurde zum Kern eines Lichtwellenleiters, gleichzeitig ein Copolymeres aus 25 Gew.-Teilen VdF, 20 Gew.-Teilen HFP und 55 Gew.-Teilen TFE zum Mantel des Lichtwellenleiters verarbeitet. Dazu wurden beide Polymere getrennt jeweils in einem Einschneckenextruder aufgeschmolzen und in einer Bikomponentendüse zum Lichtwellenleiter zusammengeführt.

Der Lichtwellenleiter wurde ähnlich wie im Beispiel 3 angegeben mit 200 kGy Co-60-Strahlung behandelt. Die Dämpfung betrug 1100 dB/km bei Zimmertemperatur, 1170 dB/km bei 70°C und 1270 dB/km bei 120°C und 650 nm. Bei 25°C und 780 nm betrug die Dämpfung 830 dB/km. Die Dämpfung vergrößerte sich nur geringfügig, wenn der Lichtwellenleiter um einen Stab mit 15 mm Radius gewunden wurde.

**Patentansprüche**

1. Lichtwellenleiter mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1,01 ist und wobei das Polymer des Mantels Einheiten enthält, die sich von Estern der Methacrylsäure oder α-Fluoracrylsäure mit fluorierten Alkoholen ableiten, dadurch gekennzeichnet, daß das Polymer des Kerns Einheiten enthält, die sich jeweils bezogen auf das Polymer, zu

   30 bis 50 Gew% von Vinylidenfluorid, zu
   25 bis 55 Gew% von Tetrafluorethylen und zu
   15 bis 25 Gew% von Hexafluorpropylen ableiten.

2. Lichtwellenleiter mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1,01 ist, dadurch gekennzeichnet, daß das Polymer des Kerns Einheiten enthält, die sich jeweils bezogen auf das Polymer, zu

   30 bis 50 Gew% von Vinylidenfluorid, zu
   25 bis 55 Gew% von Tetrafluorethylen und zu
   15 bis 25 Gew% von Hexafluorpropylen ableiten und

   wobei das Polymer des Mantels Einheiten enthält, die sich von Vinylidenfluorid zu weniger als 30 Gew% bezogen auf das Polymer, Tetrafluorethylen und Hexafluorpropylen ableiten.

3. Lichtwellenleiter nach einem der Ansprüche 1 und 2, dadurch gekennzeichnet, daß der Kern aus einem Polymer besteht, welches Einheiten enthält, die sich jeweils bezogen auf das Polymer, zu

   35 bis 45 Gew% von Vinylidenfluorid, zu
   35 bis 45 Gew% von Tetrafluorethylen und zu
   17 bis 22 Gew% von Hexafluorpropylen ableiten.

4. Lichtwellenleiter nach einem der Ansprüche 1 und 2, dadurch gekennzeichnet, daß der Mantel aus einem Polymer besteht, welches Einheiten enthält, die sich jeweils bezogen auf das Polymer, zu

   10 bis 30 Gew% von Vinylidenfluorid, zu
   45 bis 70 Gew% von Tetrafluorethylen und zu
   10 bis 25 Gew% von Hexafluorpropylen ableiten.

5. Lichtwellenleiter nach Anspruch 1, dadurch gekennzeichnet, daß der Mantel ein Poly(α-fluoracrylsäurehexafluorisopropylester)ist.

**6.** Lichtwellenleiter nach einem der Ansprüche 1 und 2, dadurch gekennzeichnet, daß das Vinylidenfluorid-Tetrafluorethylen-Hexafluorpropylen-Copolymere im Kern oder Mantel des Lichtwellenleiters durch ionisierende Strahlung vernetzt ist.

**7.** Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1,01 ist und wobei das Polymer des Mantels aus Einheiten gewonnen wird, die sich von Estern der Methacrylsäure oder α-Fluoracrylsäure mit fluorierten Alkoholen ableiten, durch Extrusion des Kerns und Umgeben des Kerns mit einem Mantel, dadurch gekennzeichnet, daß das Polymer des Kerns aus Einheiten gewonnen wird, die sich jeweils bezogen auf das Polymer, zu

30 bis 50 Gew% von Vinylidenfluorid, zu
25 bis 55 Gew% von Tetrafluorethylen und zu
15 bis 25 Gew% von Hexafluorpropylen ableiten.

**8.** Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1,01 ist, durch Extrusion des Kerns und Umgeben des Kerns mit einem Mantel, dadurch gekennzeichnet, daß das Polymer des Kerns aus Einheiten gewonnen wird, die sich jeweils bezogen auf das Polymer, zu

30 bis 50 Gew% von Vinylidenfluorid, zu
25 bis 55 Gew% von Tetrafluorethylen und zu
15 bis 25 Gew% von Hexafluorpropylen ableiten und

wobei das Polymer des Mantels aus Einheiten gewonnen wird, die sich von Vinylidenfluorid zu weniger als 30 Gew% bezogen auf das Polymere, Tetrafluorethylen und Hexafluorpropylen ableiten.

**9.** Verfahren nach einem der Ansprüche 7 und 8, dadurch gekennzeichnet, daß Kern und Mantel durch Coextrusion gleichzeitig hergestellt werden.

**10.** Verfahren nach einem der Ansprüche 7 und 8, dadurch gekennzeichnet, daß zunächst der Kern durch Extrusion hergestellt, das Polymer im Kern durch ionisierende Strahlung vernetzt und danach das Mantelmaterial auf den Kern aufgebracht wird.

**11.** Verwendung des Lichtwellenleiters nach einem der Ansprüche 1 und 2 zur Übertragung von Lichtsignalen in Datenverarbeitungsanlagen.

## Claims

**1.** An optical waveguide having a core/sheath structure whose core comprises a polymer with a refractive index n(C) and whose sheath comprises a polymer with a refractive index n(S), where n(C)/n(S) > 1.01 and where the polymer of the sheath contains units which are derived from esters of methacrylic acid or α-fluoroacrylic acid with fluorinated alcohols, wherein the polymer of the core contains units which, based in each case on the polymer, are derived from

30 to 50 % by weight of vinylidene fluoride,
25 to 55% by weight of tetrafluoroethylene and
15 to 25% by weight of hexafluoropropylene.

**2.** An optical waveguide having a core/sheath structure whose core comprises a polymer with a refractive index n(C) and whose sheath comprises a polymer with a refractive index n(S), where n(C)/n(S) > 1.01, wherein the polymer of the core contains units which, based in each case on the polymer, are derived from

30 to 50 % by weight of vinylidene fluoride,
25 to 55% by weight of tetrafluoroethylene and
15 to 25% by weight of hexafluoropropylene and

where the polymer of the sheath contains units which are derived from vinylidene fluoride to the extent of less than 30% by weight based on the polymer, tetrafluoroethylene and hexafluoropropylene.

3. An optical waveguide as claimed in one of claims 1 and 2, wherein the core comprises a polymer which contains units which, based in each case on the polymer, are derived from

   35 to 45% by weight of vinylidene fluoride,
   35 to 45% by weight of tetrafluoroethylene and
   17 to 22% by weight of hexafluoropropylene.

4. An optical waveguide as claimed in one of claims 1 and 2, wherein the sheath comprises a polymer which contains units which, based in each case on the polymer, are derived from

   10 to 30% by weight of vinylidene fluoride,
   45 to 70% by weight of tetrafluoroethylene and
   10 to 25% by weight of hexafluoropropylene.

5. An optical waveguide as claimed in claim 1, wherein the sheath is a poly(hexafluoroisopropyl $\alpha$-fluoroacrylate).

6. An optical waveguide as claimed in one of claims 1 and 2, wherein the vinylidene fluoride-tetrafluoroethylene-hexafluoropropylene copolymer in the core or sheath of the optical waveguide is crosslinked by means of ionizing radiation.

7. A process for producing an optical waveguide having a core/sheath structure whose core comprises a polymer with a refractive index n(C) and whose sheath comprises a polymer with a refractive index n(S), where n(C)/n(S) > 1.01 and where the polymer of the sheath is obtained from units which are derived from esters of methacrylic acid or $\alpha$-fluoroacrylic acid with fluorinated alcohols, by extruding the core and encasing the core with a sheath, wherein the polymer of the core is obtained from units which, based in each case on the polymer, are derived from

   30 to 50% by weight of vinylidene fluoride,
   25 to 55% by weight of tetrafluoroethylene and
   15 to 25% by weight of hexafluoropropylene.

8. A process for producing an optical waveguide having a core/sheath structure whose core comprises a polymer with a refractive index n(C) and whose sheath comprises a polymer with a refractive index n(S), where n(C)/n(S) > 1.01, by extruding the core and encasing the core with a sheath, wherein the polymer of the core is obtained from units which, based in each case on the polymer, are derived from

   30 to 50% by weight of vinylidene fluoride,
   25 to 55% by weight of tetrafluoroethylene and
   15 to 25% by weight of hexafluoropropylene, and

   where the polymer of the sheath is obtained from units which are derived from vinylidene fluoride to the extent of less than 30% by weight based on the polymer, tetrafluoroethylene and hexafluoropropylene.

9. The process as claimed in one of claims 7 and 8, wherein the core and the sheath are simultaneously produced by coextrusion.

10. The process as claimed in one of claims 7 and 8, wherein initially the core is produced by extrusion, the polymer in the core is crosslinked by ionizing radiation and subsequently the sheath material is applied to the core.

11. The use of the optical waveguide as claimed in one of claims 1 and 2 for transmitting light signals in data processing installations.

**Revendications**

1. Guide d'ondes lumineuses ayant une structure âme/enveloppe dont l'âme est constituée d'un polymère d'indice de réfraction n(K) et l'enveloppe d'un polymère d'indice de réfraction n(M), où n(K)/n(M) > 1,01, le polymère de l'enveloppe contenant des unités qui dérivent d'esters d'acide méthacrylique ou d'acide -fluoroacrylique comportant des alcools fluorés, caractérisé en ce que le polymère de l'âme contient des unités qui dérivent respectivement, par rapport au polymère,

de 30 à 50 % en poids de fluorure de vinylidène,
de 25 à 55 % en poids de tétrafluoroéthylène, et
de 15 à 25 % en poids d'hexafluoropropylène.

2. Guide d'ondes lumineuses ayant une structure âme/enveloppe dont l'âme est constituée d'un polymère d'indice de réfraction n(K) et l'enveloppe d'un polymère d'indice de réfraction n(M), où n(K)/n(M) > 1,01, caractérisé en ce que le polymère de l'âme contient des unités qui dérivent respectivement, par rapport au polymère,

de 30 à 50 % en poids de fluorure de vinylidène
de 25 à 55 % en poids de tétrafluoroéthylène et
de 15 à 25 % en poids d'hexafluoropropylène et

où le polymère de l'enveloppe contient des unités qui dérivent du fluorure de vinylidène pour moins de 30 % en poids par rapport au polymère, du tétrafluorooéthylène et de l'hexafluoropropylène.

3. Guide d'ondes lumineuses selon une des revendications 1 et 2, caractérisé en ce que l'âme est constituée d'un polymère qui contient des unités qui dérivent respectivement, par rapport au polymère,

de 35 à 45 % en poids de fluorure de vinylidène
de 35 à 45 % en poids de tétrafluoroéthylène et
de 17 à 22 % en poids d'hexafluoropropylène.

4. Guide d'ondes lumineuses selon une des revendications 1 et 2, caractérisé en ce que l'enveloppe est constituée d'un polymère qui contient des unités qui dérivent respectivement, par rapport au polymère,

de 10 à 30 % en poids de fluorure de vinylidène,
de 45 à 70 % en poids de tétrafluoroéthylène, et
de 10 à 25 % en poids d'hexafluoropropylène.

5. Guide d'ondes lumineuses selon la revendication 1, caractérisé en ce que l'enveloppe est un poly($\alpha$-fluoroacrylate d'hexafluoroisopropyle).

6. Guide d'ondes lumineuses selon une des revendications 1 et 2, caractérisé en ce que le copolymère fluorure de vinylidène-tétrafluoroéthylène-hexafluoropropylène est réticulé dans l'âme ou dans l'enveloppe du guide d'ondes lumineuses par rayonnement ionisant.

7. Procédé de fabrication d'un guide d'ondes lumineuses ayant une structure âme/enveloppe dont l'âme est constituée d'un polymère d'indice de réfraction n(K) et l'enveloppe d'un polymère d'indice de réfraction n(M), où n(K)/n(M) > 1,01, et où le polymère de l'enveloppe est obtenu à partir d'unités qui dérivent d'esters d'acide méthacrylique ou d'acide $\alpha$-fluoroacrylique avec des alcools fluorés, par extrusion de l'âme et revêtement de l'âme avec une enveloppe, caractérisé en ce que le polymère de l'âme est obtenu à partir d'unités qui dérivent respectivement, par rapport au polymère,

de 30 à 50 % en poids de fluorure de vinylidène,
de 25 à 55 % en poids de tétrafluoroéthylène et
de 15 et 25 % en poids d'hexafluoropropylène,

8. Procédé de fabrication d'un guide d'ondes lumineuses ayant une structure âme/enveloppe dont l'âme est constituée d'un polymère d'indice de réfraction n(K) et l'enveloppe d'un polymère d'indice de réfraction n(M), où n(K)/n(M) > 1,01, par extrusion de l'âme et revêtement de l'âme avec une enveloppe, caractérisé en ce que le polymère de l'âme est obtenu à partir d'unités qui dérivent respectivement, par rapport au polymère,

de 30 à 50 % en poids de fluorure de vinylidène,

de 25 à 55 % en poids de tétrafluoroéthylène et
de 15 à 25 % en poids d'hexafluoropropylène,

le polymère de l'enveloppe étant obtenu à partir d'unités qui dérivent du fluorure de vinylidène pour moins de 30 % en poids par rapport au polymère, du tétrafluoroéthylène et de l'hexafluoropropylène.

9. Procédé selon une des revendications 7 et 8, caractérisé en ce que l'âme et l'enveloppe sont fabriquées en même temps par co-extrusion.

10. Procédé selon une des revendications 7 et 8, caractérisé en ce qu'ensuite l'âme est fabriquée par extrusion, le polymère est réticulé dans l'âme par rayonnement ionisant, et qu'après le matériau de l'enveloppe est appliqué sur l'âme.

11. Utilisation du guide d'ondes lumineuses selon une des revendications 1 et 2 pour transmettre des signaux lumineux à des ordinateurs.